# EUROPÄISCHE PATENTSCHRIFT

(11) **EP 4 236 130 B1**
(45) Veröffentlichungstag und Bekanntmachung des Hinweises auf die Patenterteilung: **12.11.2025**
(21) Anmeldenummer: 23176051.3
(22) Anmeldetag: 12.05.2021
(51) Int. Cl.: H04L 1/00

(54) **OFDM-DATENÜBERTRAGUNGSVERFAHREN UND VORRICHTUNGEN ZU DESSEN DURCHFÜHRUNG**
OFDM DATA TRANSMISSION METHOD AND DEVICES FOR CARRYING OUT THE SAME
PROCÉDÉ DE TRANSMISSION DE DONNÉES OFDM ET DISPOSITIFS DESTINÉS À SA MISE EN OEUVRE

(43) Veröffentlichungstag der Anmeldung: 30.08.2023
(62) Teilanmeldung aus: 21173503.0
(73) Patentinhaber: Siemens Mobility GmbH, 80997 München (DE)
(72) Erfinder: JÄGER, Alexander, 38226 Salzgitter (DE); BEROLD, Ulrich, 90427 Nürnberg (DE); LUDWIG, Klaus, 91058 Erlangen (DE); HAIN, Stefan, 91090 Effeltrich (DE); STALLMANN, Thorsten, 38304 Wolfenbüttel (DE); LÜSSENHOP, Thomas, 38108 Braunschweig (DE)
(74) Vertreter: Siemens Patent Attorneys

(56) Entgegenhaltungen:
- WO-A1-2008/025621
- US-A1- 2007 014 257

## Beschreibung

Die Erfindung betrifft ein rechnergestütztes Datenübertragungsverfahren, bei dem zwischen einem ersten Transceiver und einem zweiten Transceiver eine Übertragung von die Daten repräsentierenden Signalen in beiden Richtungen erfolgt, wobei zur Modulation der Nutzsignale auf mehreren Trägerfrequenzen ein OFDM-Verfahren genutzt wird. Außerdem betrifft die Erfindung ein Modem, aufweisend einen Transceiver mit einer ersten Schnittstelle zur Datenübertragung und einen Computer, der über eine zweite Schnittstelle mit dem Transceiver verbunden ist. Weiterhin betrifft die Erfindung eine Bahnanlage, aufweisend ein erste Teilanlage mit einem ersten Modem und eine zweite Teilanlage mit einem zweiten Modem, wobei das erste Modem und das zweite Modem über eine erste Schnittstelle miteinander verbunden sind. Zuletzt betrifft die Erfindung ein Computerprogrammprodukt sowie eine Bereitstellungsvorrichtung für dieses Computerprogrammprodukt, wobei das Computerprogrammprodukt mit Programmbefehlen zur Durchführung dieses Verfahrens ausgestattet ist.

Als OFDM-Verfahren (Orthogonal Frequency-Division Multiplexing, deutsch Orthogonales Frequenzmultiplexverfahren) ist gemäß der Erfindung eine Implementierung einer Multicarrier-Modulation zu verstehen. Es handelt sich um ein Modulationsverfahren, welches mehrere orthogonale Träger zur digitalen Datenübertragung verwendet (d. h. das Maximum eines Trägers liegt bei seinen Nachbarträgern jeweils auf einem Nulldurchgang, wodurch eine Beeinflussung der Signale untereinander reduziert wird, die benachbarten Trägern aufmoduliert sind).

Die zu übertragenden Nutzsignale werden zunächst auf mehrere Teildatenströme mit niedriger Datenrate aufgeteilt. Diese Teildatenströme werden jeder für sich mit einem herkömmlichen Modulationsverfahren wie der Quadraturamplitudenmodulation mit geringer Bandbreite moduliert und anschließend die modulierten HF-Signale gemeinsam übertragen. Um die einzelnen Signale bei der Demodulation im Empfänger unterscheiden zu können, ist es notwendig, dass die Träger im Funktionenraum orthogonal stehen. Das bewirkt, dass die Teildatenströme sich möglichst wenig gegenseitig beeinflussen.

In der Bahntechnik gibt es Anwendungen, bei denen eine Signalübertragung zwischen Bahnkomponenten in beiden Richtungen erforderlich ist. Beispielsweise kann eine Signalübertragung zwischen einer Innenanlage in einem Stellwerk und einer Außenanlage, repräsentiert beispielsweise durch ein Lichtsignal oder eine Balise, notwendig werden. Zu diesem Zweck werden die Bahnkomponenten mit Leitungen verbunden.

Weit verbreitet ist die Signalübertragung in ISDN-Technologie. Hierbei handelt es sich allerdings um eine veraltete Technologie, weswegen es absehbar ist, dass die zur Umsetzung erforderlichen Hardwarekomponenten immer schwerer verfügbar sein werden. Für Anwendungen der Signalübertragung wie beispielsweise der Bahntechnik besteht daher ein Bedarf, alternative Übertragungstechnologien zur Verfügung zu haben.

Die eingangs bereits beschriebene OFDM-Übertragungstechnologie wird beispielsweise in Wireless LAN Netzen verwendet. Die hierbei erreichbare Übertragungssicherheit ist allerdings für bahntechnische Anwendungen nicht ausreichend. Eine Verwendung der OFDM Übertragungstechnologie für diese Anwendungsfälle ist daher nicht ohne weiteres möglich.

Dokument WO 2008/025621 A1 beschreibt ein drahtloses Breitband-Kommunikationssystem. Das System bestimmt, ob das Betriebsfrequenzband einer Störung ausgesetzt ist. Wenn dies der Fall ist, bestimmt das System, ob eine solche Interferenz einen oder mehrere Teile des Bandes beeinflusst. Wenn die Interferenz nur Teile des Bands beeinflusst, reduziert das System die Datenrate und die Anzahl der zum Übertragen von Daten verwendeten Unterträger. Als nächstes ordnet das System die zu übertragenden Daten den Unterträgern zu, die derzeit den niedrigsten Interferenzpegeln ausgesetzt sind, während es den Unterträgern, die derzeit den höchsten Interferenzpegeln unterliegen, keine Daten zuordnet.

Die Aufgabe der Erfindung besteht darin, ein Datenübertragungsverfahren bzw. eine Vorrichtung zur Durchführung dieses Datenübertragungsverfahrens für Signale in beide Richtungen anzugeben, welches eine hohe Zuverlässigkeit bei der Übertragung gewährleistet und insbesondere auch für sicherheitskritische Anwendungen wie bahntechnische Anwendungen einsetzbar ist. Außerdem besteht die Aufgabe der Erfindung darin, ein Computerprogrammprodukt sowie eine Bereitstellungsvorrichtung für dieses Computerprogrammprodukt anzugeben, mit dem das vorgenannte Verfahren durchgeführt werden kann.

Diese Aufgabe wird mit dem eingangs angegebenen Anspruchsgegenstand (Datenübertragungsverfahren) erfindungsgemäß dadurch gelöst, dass zur Übertragung der Signale in den beiden Richtungen dem ersten Transceiver und dem zweiten Transceiver jeweils Zeitschlitze zum Senden und Empfangen zugewiesen werden, jedem Zeitschlitz für jede verwendete Trägerfrequenz eine Modulationsvorschrift zugeordnet wird, mit den übertragenen Signalen zumindest dann Steuersignale, welche mindestens eine zu verwendende Modulationsvorschrift festlegen, übertragen werden, wenn die Modulationsvorschrift für mindestens eine Trägerfrequenz geändert werden soll.

Die Übertragung der Signale in Zeitschlitzen bei einem OFDM-Verfahren verringert zwar die Datenrate, da durch beide Transceiver entweder Daten nur empfangen oder nur gesendet werden können (Bei OFDM-Verfahren ist die Verwendung von getrennten Sende und Empfangsfrequenzen üblich). Dafür steht jedoch für die Übertragung der Daten die gesamte Bandbreite des OFDM-Verfahrens zur Verfügung. Hierdurch wird es möglich, zur Sicherung der Übertragungsqualität eine Reserve in der Bandbreite der Übertragung zur Verfügung zu stellen. Diese Reserve kann als Redundanz genutzt werden, um bei einer Veränderung der Übertragungsqualität rechtzeitig mit Maßnahmen reagieren zu können, die die Übertragungsqualität sichern und daher einen Abbruch der Übertragung zuverlässig verhindern. Deswegen ist das erfindungsgemäße Übertragungsverfahren vorteilhaft auch für eine Anwendung bei sicherheitskritischen Umgebungen wie der Bahntechnik möglich.

Für die Übertragung der Signale in beiden Richtungen (Duplexbetrieb) wird ein Time Division Duplexverfahren, kurz TDD-Verfahren verwendet. Bei einem solchen Verfahren werden zum Senden und Empfangen der Daten jeweils definierte Zeitschlitze für den Betrieb des Transceivers vorgesehen, so dass dieser immer entweder nur sendet oder nur empfängt. Unterschieden wird zwischen Zeitschlitzen zum Senden von Signalen und Zeitschlitzen zum Empfangen von Signalen. Ist allgemein nur von Zeitschlitzen die Rede, so gelten die mit der Erwähnung verbundenen Aussagen jeweils sowohl für Zeitschlitze zum Senden als auch für Zeitschlitze zum Empfangen gleichermaßen.

Um die Übertragungsqualität in der oben genannten Weise zu sichern ist erfindungsgemäß vorgesehen, dass jedem Zeitschlitz für jede verwendete Trägerfrequenz eine Modulationsvorschrift zugeordnet wird und diese Modulationsvorschrift in mittels ebenfalls übertragenen Steuersignalen neu festgelegt werden können, wenn die Modulationsvorschrift für die betreffende Trägerfrequenz geändert werden soll. Dies ermöglicht es nämlich, gezielt bei jeder verwendeten Trägerfrequenz auf einer Verschlechterung der Übertragungsqualität reagieren zu können, wobei Änderungen durch eine Modifikation der Modulationsvorschrift vorgenommen werden.

Jedem für die Übertragung verwendeten Kanal ist eine Trägerfrequenz zugeordnet. Die Trägerfrequenz ist mit einer Modulationsvorschrift verknüpft. Auf diese Weise entsteht ein Array von den Trägerfrequenzen zugeordneten Modulationsvorschriften, welche im Zusammenhang mit dieser Erfindung auch als Modulationstabelle bezeichnet werden soll. Teil der Modulationsvorschrift ist auch eine zu übertragende Datenrate für die zu übertragenen Signale, wobei die Höhe der Datenrate eine Reserve für Übertragungsverluste (zum Beispiel durch auftretende Übertragungsfehler) in der betreffenden Trägerfrequenz beeinflusst.

Als Nutzsignale im Sinne der Erfindung sind diejenigen Signale zu verstehen, für die das Datenübertragungsverfahren durchgeführt wird, die also ausgetauscht werden sollen. Mit anderen Worten handelt es sich um Signale, die zum Betrieb von Applikationen erforderlich sind, die unter Zuhilfenahme des Datenübertragungsverfahrens miteinander kommunizieren.

Demgegenüber sind Steuersignale diejenigen Signale, die benötigt werden, um das Datenübertragungsverfahren durchzuführen. Insbesondere ist es notwendig, Steuersignale für die Änderung von Modulationsvorschriften auszutauschen, damit der erste Transceiver und der zweite Transfer dauerhaft miteinander kommunizieren können. Auch ist es erforderlich, die Kommunikation zwischen dem ersten Transceiver und dem zweiten Transceiver zu synchronisieren. Zu diesem Zweck können in regelmäßigen Abständen Synchronisationssignale versendet werden, welche ebenfalls die Eigenschaft von Steuersignalen haben.

Gemäß der Erfindung ist vorgesehen, dass eine geänderte Modulationsvorschrift einer Trägerfrequenz für einen einzelnen Zeitschlitz verwendet wird, dann aber für darauffolgende Zeitschlitze die Modulationsvorschrift für diese Trägerfrequenz vor der Änderung verwendet wird. Dann wird die Übertragungsqualität in dem Zeitschlitz, in dem die geänderte Modulationsvorschrift verwendet wurde, mit der Übertragungsqualität in mindestens einem Zeitschlitz, in dem die Modulationsvorschrift vor der Änderung verwendet wurde, verglichen. Erst nach dem Vergleich wird die geänderte Modulationsvorschrift für folgende Zeitschlitze nur dann weiterverwendet, wenn die Übertragungsqualität gleichgeblieben ist oder eine Verbesserung der Übertragungsqualität ermittelt werden konnte. Ansonsten wird sie verworfen.

Der beschriebene Verfahrensablauf trägt dem Umstand Rechnung, dass eine Änderung der Modulationsvorschrift daraufhin überprüft werden muss, ob diese Änderung zu einer Verbesserung der Übertragungsqualität führt. Ist dies nicht der Fall, soll die Änderung wieder verworfen werden, um dauerhaft eine hohe Übertragungsqualität sicherzustellen.

Der Verfahrensablauf kann als Trial-and-Error-Verfahren bezeichnet werden. Wird eine Verschlechterung der Übertragungsqualität festgestellt, kann nämlich die Quelle für die Verschlechterung nicht beurteilt werden. Gemessen wird lediglich das Ergebnis. Die Wirksamkeit der Maßnahme einer Änderung der Modulationsvorschrift lässt sich daher nicht von vorneherein beurteilen. Vielmehr muss überprüft werden, ob sich die Übertragungsqualität wirklich verbessert hat.

Um bei einer Verschlechterung der Übertragungsqualität nicht zu riskieren, dass ein Verbindungsabbruch erfolgt, wird da er zunächst auf die vorher verwendete Modulationsvorschrift zurückgeschaltet. Für diese ist eine Verschlechterung der Übertragungsqualität zwar bereits erfasst worden, aufgrund der Übertragungsreserven erfolgt aber eine Übertragung noch zuverlässig. Dies wird sichergestellt, in dem das Datenübertragungsverfahren kontinuierlich überwacht wird, sodass bei einer beginnenden Verschlechterung der Übertragungsqualität bereits interveniert werden kann.

Sollte eine Modifikation der Modulationsvorschrift nicht zum gewünschten Ziel einer Verbesserung der Übertragungsqualität führen, kann, nachdem diese Modifikation verworfen wurde, eine andere Modifikation ausprobiert werden. Beispielsweise könnte zunächst die Datenrate verringert werden, und wenn dies nicht zum gewünschten Erfolg führt, die Trägerfrequenz gewechselt werden.

Unter "rechnergestützt" oder "computerimplementiert" kann im Zusammenhang mit der Erfindung eine Implementierung des Verfahrens verstanden werden, bei dem mindestens ein Computer mindestens einen Verfahrensschritt des Verfahrens ausführt.

Der Ausdruck "Computer" deckt alle elektronischen Geräte mit Datenverarbeitungseigenschaften ab**.** Computer können beispielsweise Personal Computer, Server, Handheld-Computer, Mobilfunkgeräte und andere Kommunikationsgeräte, Prozessoren und andere elektronische Geräte zur Datenverarbeitung sein, die vorzugsweise auch zu einem Netzwerk zusammengeschlossen sein können.

Unter einem "Prozessor" kann im Zusammenhang mit der Erfindung beispielsweise ein Wandler, ein Sensor zur Erzeugung von Messsignalen oder eine elektronische Schaltung verstanden werden. Bei einem Prozessor kann es sich insbesondere um einen Hauptprozessor (engl. Central Processing Unit, CPU), einen Mikroprozessor, einen Mikrocontroller, oder einen digitalen Signalprozessor, möglicherweise in Kombination mit einer Speichereinheit zum Speichern von Programmbefehlen, etc. handeln. Auch kann unter einem Prozessor ein virtualisierter Prozessor oder eine Soft-CPU verstanden werden.

Unter einer "Speichereinheit" kann im Zusammenhang mit der Erfindung beispielsweise ein computerlesbarer Speicher in Form eines Arbeitsspeichers (engl. Random-Access Memory, RAM) oder Datenspeichers (Festplatte oder Datenträger) verstanden werden.

Als "Schnittstellen" können hardwaretechnisch, beispielsweise kabelgebunden oder als Funkverbindung, oder softwaretechnisch, beispielweise als Interaktion zwischen einzelnen Programmmodulen eines oder mehrerer Computerprogramme, realisiert sein.

Als "Programmmodule" sollen einzelne Funktionsabläufe verstanden werden, die einen erfindungsgemäßen Programmablauf von rechnergestützten Verfahrensschritten ermöglichen. Diese Funktionsabläufe können in einem einzigen Computerprogramm oder in mehreren miteinander kommunizierenden Computerprogrammen verwirklicht sein. Die hierbei realisierten Schnittstellen können softwaretechnisch innerhalb eines einzigen Prozessors umgesetzt sein oder hardwaretechnisch, wenn mehrere Prozessoren zum Einsatz kommen.

Erfindungsgemäß ist vorgesehen, dass eine Änderung der Modulationsvorschrift für die Trägerfrequenzen in Abhängigkeit von einer Übertragungsqualität der Signalübertragung vorgenommen wird.

Wie bereits erwähnt, trägt eine Änderung der Modulationsvorschrift für die einzelnen Trägerfrequenzen dazu bei, dass eine Übertragungsqualität überwacht werden kann. Bei einer Verringerung der Übertragungsqualität können daher durch Änderung der Modulationsvorschrift einer bestimmten Trägerfrequenz Maßnahmen ergriffen werden, um die Übertragungsqualität zu sichern und wieder zu verbessern. Dies wirkt sich vorteilhaft auf die Übertragungssicherheit des Datenübertragungsverfahrens aus, sodass dies auch für sicherheitskritische Anwendungen geeignet ist. Die Überwachung findet im laufenden Übertragungsverfahren statt, sodass durch die Ausnutzung von Übertragungsreserven ein Reagieren auf eine Verringerung der Übertragungsqualität zu einem Zeitpunkt ermöglicht wird, in dem die Übertragung noch zuverlässig möglich ist.

Gemäß einer Ausgestaltung der Erfindung ist vorgesehen, dass die Übertragungsqualität anhand einer bei der verwendeten Modulationsvorschrift und verwendeten Trägerfrequenz jeweils bei der Übertragung auftretenden Korrekturrate bestimmt wird.

Die Bestimmung der Übertragungsqualität mit Hilfe der auftretenden Korrekturrate soll im Zusammenhang mit dieser Erfindung als indirekte Kanalschätzung bezeichnet werden. Dem Prinzip der indirekten Kanalschätzung legte die Erkenntnis zugrunde, dass die Fehlerkorrekturrate als Maß für die Beurteilung der Übertragungsqualität herangezogen werden kann. Beispielsweise kann die Bitfehlerrate aus der Signalkodierung als Fehlerkorrekturrate ermittelt werden.

Auf diesem Weg wird eine Auswertung der Fehlerstatistik zur indirekten Kanalschätzung möglich. Für die Aufstellung der Fehler Statistik wird die Fehlerkorrekturrate über einen gewissen Zeitraum beobachtet. Durch eine Adaption der Modulationstabelle bzw. Anpassung des Übertragungsverfahrens an die aktuellen Kanaleigenschaften wird die Übertragungsqualität und damit die Übertragungssicherheit sichergestellt.

Ist die Modulationstabelle bei einem OFDM-Übertragungssystem bekannt, können anhand der entstehenden Korrekturrate die Kanaleigenschaften für jeden Kanal einzeln geschätzt werden. Durch die Kenntnis der Modulationstabelle lassen sich die korrigierten Bytes nämlich den einzelnen Trägerfrequenzen zuordnen. Bei der Korrektur erhält man also die Kenntnis über die fehlerbehafteten Trägerfrequenzen und kann anhand eines begleitenden Prozesses die Kanalqualität abschätzen und die Modulationstabelle ggf. anpassen.

Gemäß einer Ausgestaltung der Erfindung ist vorgesehen, dass die Änderung der Modulationsvorschrift in einer Änderung der Datenrate für die betreffende Trägerfrequenz und/oder in einer Zuweisung einer anderen Trägerfrequenz besteht.

Durch eine Änderung der Datenrate für eine bestimmte Trägerfrequenz kann sowohl auf eine Erhöhung der Übertragungsqualität als auch auf eine Verringerung der Übertragungsqualität bei dieser Trägerfrequenz reagiert werden. Wird die Korrekturrate als Maß für die Übertragungsqualität verwendet, gilt zum Beispiel, dass, je höher die Korrekturrate ist, desto geringer die Datenrate sein muss. Dadurch wird erreicht, dass die Übertragungsreserve zur Korrektur von Fehlern verändert werden kann. Je geringer die Datenrate ist, desto größer ist die Reserve für eine Fehlerkorrektur und andersherum. Solange in der Gesamtheit der durch das OFDM-Verfahren verwendeten Kanäle Reserven verfügbar sind, können diese, wie im Folgenden näher erläutert wird, dadurch flexibel und in Abhängigkeit von der Korrekturrate auf die Kanäle verteilt werden.

Außerdem ist es möglich, zwischen Trägerfrequenzen zu wechseln, wenn in dem OFDM-Verfahren mehr Trägerfrequenzen zur Verfügung stehen, als für das zu übertragende Datenvolumen genutzt werden müssen. Diese Maßnahme kann insbesondere erforderlich werden, wenn die Übertragungsqualität auf einem Kanal stärker absinkt, sodass die Gefahr besteht, dass die Übertragungsreserven für eine Fehlerkorrektur nicht mehr ausreichen.

Gemäß einer Ausgestaltung der Erfindung ist vorgesehen, dass die Änderung in einer Verringerung der Datenrate besteht, wobei die Änderung durchgeführt wird, wenn die Übertragungsqualität in einem festgelegten Zeitraum oder innerhalb einer festgelegten Zahl von Zeitschlitzen sich verringert und/oder einen festgelegten unteren Grenzwert unterschreitet

Auf eine Verringerung der Übertragungsqualität wird, wie bereits erläutert, mit einer Verringerung der Datenrate reagiert, um Übertragungsreserven für eine fehlerfreie Übertragung zu sichern. Unter einer Verringerung der Datenrate soll im Sinne der Erfindung auch eine Verringerung auf 0 verstanden werden. Mit anderen Worten ist dies mit einem Abschalten der betreffenden Trägerfrequenz zu verbunden. Für die betreffende Modulationsvorschrift kann dann eine andere Trägerfrequenz verwendet werden, die bisher nicht zur Übertragung von Daten genutzt wird. Dies setzt voraus, dass nicht alle Trägerfrequenzen bei der Datenübertragung genutzt werden müssen, so dass eine Reserve zur Verfügung steht (Redundanz).

Die Ermittlung der Übertragungsqualität in einem festgelegten Zeitraum oder innerhalb einer festgelegten Zahl von Zeitschlitzen trägt vorteilhaft dazu bei, dass das Überwachungsverfahren stabiler läuft. Erhöht sich beispielsweise die Korrekturrate wegen eines einmaligen Ereignisses nur kurzzeitig oder für wenige Übertragungsschlitze (sogenannte Ausreißer) wirkt sich das auf den betrachteten Zeitraum bzw. die betrachtete Anzahl von Zeitschlitzen wenig aus, weswegen keine Modifikation der Modulationsvorschrift erforderlich ist.

Gemäß einer Ausgestaltung der Erfindung ist vorgesehen, dass die Änderung in einer Erhöhung der Datenrate besteht, wobei die Änderung durchgeführt wird, wenn die Übertragungsqualität in einem festgelegten Zeitraum oder innerhalb einer festgelegten Zahl von Zeitschlitzen sich verbessert und/oder einen festgelegten oberen Grenzwert überschreitet.

Verbessert sich in einem Kanal die Übertragungsqualität, so wird vorteilhaft darauf reagiert, in dem in diesem Kanal die Datenrate vergrößert wird. In diesem Fall kann hingenommen werden, dass dadurch die zur Verfügung stehende Übertragungsreserve sich verringert. Falls die Übertragungsqualität in dem betreffenden Kanal sinken sollte, würde die Datenrate wieder verringert.

Die Vergrößerung der Datenrate ermöglicht es, in anderen Kanälen wegen einer Verschlechterung der Übertragungsqualität die Datenrate zu verringern. Insgesamt steht bei dem Übertragungsverfahren somit immer genug Übertragungsvolumen zur Verfügung. Mit anderen Worten wird die Verringerung der Datenrate in einem Kanal durch eine Erhöhung der Datenrate in einem anderen Kanal kompensiert, solange dies möglich ist. Erst wenn die Datenrate auf zu vielen Kanälen verringert werden muss, wird somit die Reserve für eine Fehlerkorrektur aufgebraucht. Dies bedeutet, dass das Datenübertragungsverfahren flexibel auf äußere Einflüsse reagieren kann und damit so lange wie möglich stabil läuft. Dies macht das Verfahren auch für sicherheitsrelevante Anwendungen wie die Bahntechnik verwendbar.

Gemäß einer Ausgestaltung der Erfindung ist vorgesehen, dass die Übertragungsqualität mit Hilfe einer direkten Kanalschätzung bestimmt wird.

Die direkte Kanalschätzung stellt eine Alternative zur bereits erläuterten indirekten Kanalschätzung dar. Als direkte Kanalschätzung im Sinne der Erfindung soll ein Verfahren verstanden werden, bei dem eine mit der Übertragung verbundene Messgröße einen direkte Rückschluss auf die Übertragungsqualität ermöglicht. Verfahren zur direkten Kanalschätzung sind an sich bekannt. Eine direkte Kanalschätzung hat den Vorteil, dass diese auch außerhalb des laufenden Betriebs durchgeführt werden kann, weil diese unabhängig von der Aufzeichnung einer Fehlerkorrekturrate durchgeführt werden kann.

Gemäß einer Ausgestaltung der Erfindung ist vorgesehen, dass die direkte Kanalschätzung in einem Initialisierungsschritt zur Einrichtung des Übertragungsverfahrens durchgeführt wird.

Ein Initialisierungsschritt wird erforderlich, wenn das Verfahren gestartet wird. Hierbei kann es sich um eine Erstinbetriebnahme oder eine Wiederinbetriebnahme der das Verfahren durchführenden Vorrichtungen handeln.

Bei dem Initialisierungsschritt startet das Verfahren mit einer Modulationstabelle. Diese kann aus einem vorhergehenden Betriebsabschnitt stammen (Wiederinbetriebnahme). Bei einer Erstinbetriebnahme steht jedoch keine Modulationstabelle aus vorherigen Betriebsabschnitten zur Verfügung. Daher ist in diesem Fall für den Initialisierungsschritt eine Modulationstabelle vorbelegt (Default-Werte).

Die Modulationstabelle, mit der der Initialisierungsschritt durchgeführt wird, ist insbesondere, wenn es sich um die Default-Modulationstabelle des Auslieferungszustandes handelt, nicht optimal auf die aktuellen Übertragungsbedingungen für das Datenübertragungsverfahren abgestimmt. Daher ist es vorteilhaft, die Übertragungsqualität des Übertragungsverfahrens mittels des Initialisierungsschrittes bereits vor der ersten Übertragung von applikationsbezogenen Nutzsignalen zu verbessern.

Als zu übertragende Signale können für den Initialisierungsschritt vorgesehene Standardsignale oder auch Zufallssignale übertragen werden. Im Initialisierungsschritt ist es noch nicht von Bedeutung, dass die Signale fehlerfrei übertragen werden, sondern lediglich, dass sich aus den übertragenen Signalen der zu bestimmende Signal-Rauschabstand ablesen lässt.

Die genannte Aufgabe wird alternativ mit dem eingangs angegebenen Anspruchsgegenstand (Modem) erfindungsgemäß auch dadurch gelöst, dass das Modem eingerichtet ist, ein Verfahren zur Datenübertragung gemäß einem der voranstehenden Ansprüche durchzuführen.

Die genannte Aufgabe wird außerdem alternativ mit dem eingangs angegebenen Anspruchsgegenstand (Bahnanlage) erfindungsgemäß auch dadurch gelöst, dass das erste Modem und das zweite Modem jeweils gemäß dem vorstehenden Anspruch ausgeführt sind.

Mit den Vorrichtungen lassen sich die Vorteile erreichen, die im Zusammenhang mit dem obenstehend näher beschriebenen Verfahren bereits erläutert wurden. Das zum erfindungsgemäßen Verfahren Aufgeführte gilt entsprechend auch für die erfindungsgemäßen Vorrichtungen.

Des Weiteren wird ein Computerprogrammprodukt mit Programmbefehlen zur Durchführung des genannten erfindungsgemäßen Verfahrens und/oder dessen Ausführungsbeispielen beansprucht, wobei mittels des Computerprogrammprodukts jeweils das erfindungsgemäße Verfahren und/oder dessen Ausführungsbeispiele durchführbar sind.

Darüber hinaus wird eine Bereitstellungsvorrichtung zum Speichern und/oder Bereitstellen des Computerprogrammprodukts beansprucht. Die Bereitstellungsvorrichtung ist beispielsweise ein Speichereinheit, die das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes, beispielsweise cloudbasiertes Computersystem und/oder virtuelles Rechnersystem, welches das Computerprogrammprodukt vorzugsweise in Form eines Datenstroms speichert und/oder bereitstellt.

Die Bereitstellung erfolgt in Form eines Programmdatenblocks als Datei, insbesondere als Downloaddatei, oder als Datenstrom, insbesondere als Downloaddatenstrom, des Computerprogrammprodukts. Diese Bereitstellung kann beispielsweise aber auch als partieller Download erfolgen, der aus mehreren Teilen besteht. Ein solches Computerprogrammprodukt wird beispielsweise unter Verwendung der Bereitstellungsvorrichtung in ein System eingelesen, sodass das erfindungsgemäße Verfahren auf einem Computer zur Ausführung gebracht wird.

Weitere Einzelheiten der Erfindung werden nachfolgend anhand der Zeichnung beschrieben. Gleiche oder sich entsprechende Zeichnungselemente sind jeweils mit den gleichen Bezugszeichen versehen und werden nur insoweit mehrfach erläutert, wie sich Unterschiede zwischen den einzelnen Figuren ergeben.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Komponenten auch durch mit den vorstehend beschriebenen Merkmalen der Erfindung kombinierbar.

Es zeigen:
Figur 1 ein Ausführungsbeispiel der erfindungsbemäßen Vorrichtungen (Modem und Bahnanlage) mit ihren Wirkzusammenhängen schematisch,
Figur 2 die Signalamplitude s in Abhängigkeit von der Zeit t in einem Diagramm, in dem exemplarisch ein Rahmen mit 8 Zeitschlitzen zur Übertragung von Signalen dargestellt ist,
Figur 3 ein Ausführungsbeispiel des erfindungsgemäßen Verfahrens zur Übertragung von Signalen in einem Rahmen gemäß Figur 2 als Flussdiagramm, wobei die einzelnen Verfahrensschritte einzeln oder in Gruppen durch Programmmodule verwirklicht sein können und wobei die Funktionseinheiten und Schnittstellen gemäß Figur 1 beispielhaft angedeutet sind,
Figur 4 ein Ausführungsbeispiel des erfindungsgemäßen Verfahrens mit den Programmmodulen einer direkten Kanalschätzung und einer indirekten Kanalschätzung, wobei das Verfahren gemäß Figur 3 in das Verfahren gemäß Figur 4 mehrmals eingebettet ist.

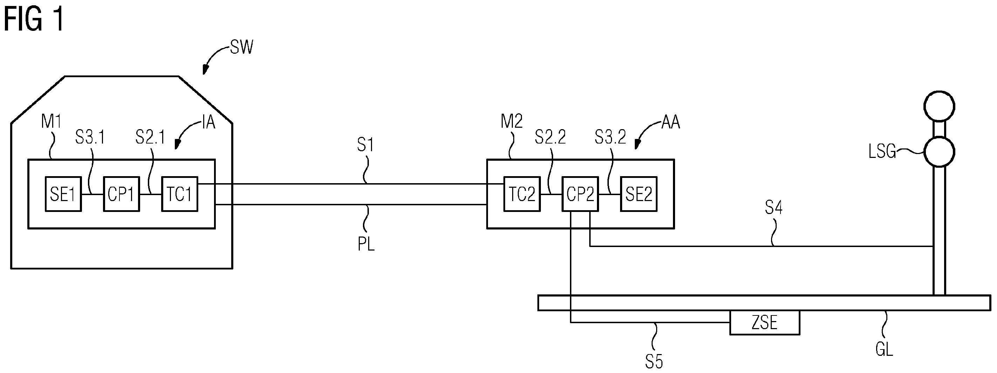

In Figur 1 ist schematisch eine Bahnanlage dargestellt. Diese wird repräsentiert durch ein Stellwerk SW und ein Gleis GL. Am Gleis GL kommt weiterhin ein Lichtsignal LSG und eine Zugsicherungseinrichtung ZSE zum Einsatz. Bei der Zugsicherungseinrichtung ZSE kann es sich beispielsweise um eine Balise handeln. Die Darstellung ist stark vereinfacht. Die Bahnanlage könnte über die dargestellten Funktionselemente hinaus noch weitere Funktionselemente enthalten, die aufgrund eines gemeinsamen Funktionszusammenhangs die Bahnanlage definieren.

Die abgebildeten Elemente können jedoch dazu dienen, um die Funktionsweise einer Signalübertragung entsprechend der Erfindung zu erläutern. Die Signalübertragung erfolgt über eine kabelgebundene erste Schnittstelle S1. Sie verbindet eine erste Teilanlage der Bahnanlage, die in Figur 1 als Innenanlage IA im Stellwerk SW installiert ist, mit einer zweiten Teilanlage der Bahnanlage, die in Figur 1 als Außenanlage AA am Gleis GL, beispielsweise in einem nicht näher dargestellten Schaltkasten, installiert ist.

In der Innenanlage IA kommt ein erstes Modem M1 und in der Außenanlage AA ein zweites Modem M2 zwecks Übertragung von Signalen über die erste Schnittstelle S1 zum Einsatz. Das erste Modem M1 weist einen ersten Transceiver TC1, einen ersten Computer CP1 und eine erste Speichereinrichtung SE1 auf. Der Computer CP1 ist über eine zweite Schnittstelle S2.1 mit dem Transceiver TC1 und über eine dritte Schnittstelle S3.1 mit der ersten Speichereinrichtung SE1 verbunden.

Das zweite Modem M2 ist entsprechend aufgebaut. Ein zweiter Computer CP2 ist über eine weitere zweite Schnittstelle S2.2 mit einem zweiten Transceiver TC2 und über eine weitere dritte Schnittstelle S3.2 mit einer zweiten Speichereinrichtung SE2 verbunden. Der erste Transceiver TC1 und der zweite Transceiver TC2 kommunizieren über die besagte erste Schnittstelle S1 miteinander, wobei diese kabelgebundene Schnittstelle zur Überbrückung größerer Distanzen von beispielsweise bis zu 20 km ausgelegt ist. Neben einer Übertragung von Signalen über die erste Schnittstelle S1 ist außerdem eine Stromleitung PL zwischen dem ersten Modem M1 in der Innenanlage IA und dem zweiten Modem M2 in der Außenanlage AA vorgesehen, welche das zweite Modem M2 mit Energie versorgt.

Das erste Modem M1 ist dazu eingerichtet, Stellbefehle aus dem Stellwerk SW an die Außenanlage AA zu übermitteln. Diese ist dazu eingerichtet, über eine vierte Schnittstelle S4 die Stellbefehle an das Lichtsignal LSG zu übermitteln und über eine fünfte Schnittstelle S5 an die Zugsicherungseinrichtung ZSE zu übermitteln. In umgekehrter Richtung können Rückmeldesignale der Zugsicherungseinrichtung ZSE oder des Lichtsignals LSG in gleicher Weise über die erste Schnittstelle S1 an das Stellwerk SW übermittelt werden.

Wie erwähnt, ist die Bahnanlage gemäß Figur 1 stark vereinfacht dargestellt. Insbesondere können zur Ansteuerung des Lichtsignals LSG oder der Zugsicherungseinrichtung ZSE in der Außenanlage AA sowie zur Generierung von Stellbefehlen in der Innenanlage IA weitere, nicht dargestellte Computer zum Einsatz kommen.

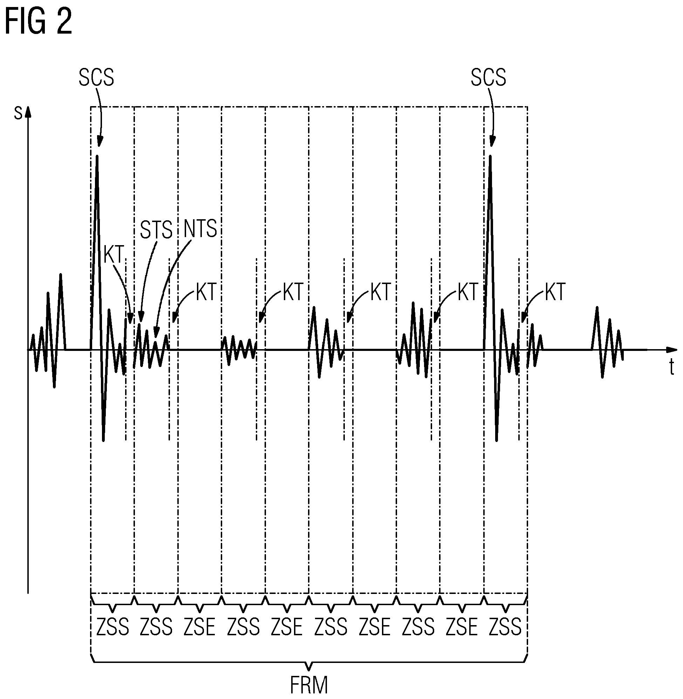

In Figur 2 ist der Signalverlauf des Sendesignals s über die Zeit t eines der beiden Transceiver dargestellt. Im Rahmen des Ausführungsbeispiels wird davon ausgegangen, dass dies der erste Transceiver TC1 ist. Der Signalverlauf soll anhand eines Rahmens FRM erläutert werden, wobei sich Figur 2 entnehmen lässt, dass dieser Rahmen FRM einen Ausschnitt des zeitlichen Verlaufs des Signals s darstellt und auf diese Weise eine nicht dargestellte Aneinanderreihung von Rahmen entsteht.

Wie in Figur 2 dargestellt, wird der Rahmen durch Synchronisationssignale SCS begrenzt (und ist durch diese definiert), die in regelmäßigen Zeitabständen durch den ersten Transceiver TC1 gesendet werden. Sowohl für das Senden des Synchronisationssignals SCS als auch für das Senden von Nutzsignalen NTS sowie Steuersignalen STS, stehen in dem Rahmen FRM Zeitschlitze ZSS zum Senden zur Verfügung. In diesen lässt sich, wie in Figur 2 angedeutet, ein Sendesignal über die erste Schnittstelle S1 versenden. Dies ist durch einen Signalverlauf in Form von Schwingungen (Ausschlägen in der Signalamplitude) in Figur 2 angedeutet. Weiterhin gibt es Zeitschlitze ZSE zum Empfangen, in denen der erste Transceiver TC1 nicht sendet, sondern empfängt. Das empfangene Signal ist in Figur 2 nicht dargestellt. Das Sendesignal ist in den Zeitschlitzen zum Empfangen ZSE nicht vorhanden, da dieses nicht übertragen werden kann (bedingt durch das Funktionsprinzip des Time-Division-Duplex-Verfahrens).

Weiterhin ist in Figur 2 zu erkennen, dass ein Rahmen FRM jeweils vier Zeitschlitze zum Senden ZSS und vier Zeitschlitze zum Empfangen ZSE zur Verfügung stellt. Hinzu kommt der Zeitschlitz zum Senden ZSS, in dem das Synchronisationssignal SCS übertragen wird. Die übrigen Zeitschlitze stehen zur Übertragung eines Nutzsignals NTS und/oder eines Steuersignals STS zur Verfügung, wie dies in Figur 2 ebenfalls angedeutet ist. Als Nutzsignale sollen Signale verstanden werden, die Informationen bezüglich der laufenden Applikation der Bahnanlage betreffen. Hierbei kann es sich beispielsweise um die Steuerung eines Lichtsignals handeln. Als Steuersignale STS sollen Signale verstanden werden, die für den Betrieb des erfindungsgemäßen Übertragungsverfahrens notwendig sind. Hierbei kann es sich beispielsweise um Anpassungen im Verfahrensablauf des Übertragungsverfahrens handeln, die erforderlich werden, um die Übertragungsqualität auf Dauer sicherzustellen (hierzu im Folgenden noch mehr).

Zu bemerken ist, dass die Zeitschlitze zum Empfangen ZSE ebenfalls sowohl empfangene Nutzsignale NTS als auch empfangene Steuersignale STS enthalten können, auch wenn dies in Figur 2 nicht dargestellt ist. Ein Rahmen FRM des zweiten Transceivers TC2 würde ähnlich aussehen wie der des ersten Transceivers TC1; nur, dass die Zeitschlitze zum Senden ZSS und die Zeitschlitze zum Empfangen ZSE zumindest derjenigen Zeitschlitze, die Nutzsignale NTS und Steuersignale STS übertragen, komplementär zu den in Figur 2 dargestellten angeordnet sein würden. So ist sichergestellt, dass der zweite Transceiver TC2 empfängt, während der erste Transceiver TC1 sendet und umgekehrt.

Für den Empfang des Synchronisationssignals SCS durch den Zeitschlitz zum Senden ZSS des ersten Transceivers TC1 (in Figur 2 dargestellt) liegt zeitgleich im zweiten Transceiver TC2 ein Zeitschlitz zum Empfangen ZSE (nicht dargestellt). Bei bekannter Signallaufzeit in dem durch die erste Schnittstelle S1 realisierten Kabel kann durch Empfang des Synchronisationssignals SCS im zweiten Transceiver TC2 eine Synchronisation des Verfahrens vorgenommen werden, indem eine Drift von Uhren zur Synchronisation der Zeitfenster ggf. korrigiert wird.

Das Synchronisationssignal SCS kann in nicht dargestellter Weise aber auch dazu verwendet werden, die Signallaufzeit in dem die erste Schnittstelle S1 bildenden Kabel zu ermitteln. Zu diesem Zweck wird das Synchronisationssignal SCS, gesendet durch den ersten Transceiver TC1, durch den zweiten Transceiver TC2 nach Empfang wieder zurückgesendet und durch den ersten Transceiver TC1 wieder empfangen. Ist die Reaktionszeit des zweiten Transceivers TC2 bekannt, so kann die Signallaufzeit ermittelt werden durch die Differenz zwischen dem Empfangszeitpunkt und dem Sendezeitpunkt des Synchronisationssignals SCS durch den ersten Transceiver TC1, wobei von dieser Differenz die Reaktionszeit des zweiten Transceivers TC2 abgezogen wird und dieses Ergebnis durch 2 geteilt wird. Selbstverständlich können die Rollen der Transceiver TC1, TC2 bei dem Laufzeitmessverfahren vertauscht sein.

Weiterhin sind in Figur 1 Karenzzeiten KT dargestellt. Diese werden im Zeitschlitz zum Senden ZSS des Synchronisationssignals SCS vorgesehen, damit das Synchronisationssignal ausklingen kann und die Übertragung von Steuersignalen STS und Nutzsignalen NTS in darauffolgenden Zeitschlitzen zum Senden ZSS nicht beeinflusst. Auch in den Zeitschlitzen zum Senden und/oder in den Zeitschlitzen zum Empfangen (letzteres in Figur 2 nicht dargestellt) können Karenzzeiten KT vorgesehen werden, die die Signallaufzeiten berücksichtigen. Auf diese Weise wird sichergestellt, dass ausgesendete Signale STS, NTS auch unter Berücksichtigung ihrer Laufzeit in dem zur Verfügung stehenden Zeitfenster zum Empfangen ZSE vollständig empfangen werden können. Deswegen endet die Übertragung der Signale in dem Zeitfenster zum Senden ZSS, um den Betrag der Karenzzeit KT verfrüht vor dem tatsächlichen Ende des Zeitfensters zum Senden ZSS.

In Figur 2 ist weiterhin dargestellt, dass die in den Zeitfenstern zum Senden ZSS gesendeten Signale nicht notwendigerweise immer Steuersignale STS und Nutzsignale NTS enthalten müssen. Steuersignale STS müssen nur übertragen werden, wenn Änderungen an dem in Durchführung befindlichen Übertragungsverfahren erfolgen sollen. Nutzsignale NTS müssen nur übertragen werden, wenn zwischen der Innenanlage IA und der Außenanlage AA eine Kommunikation erforderlich ist. Demgegenüber werden Synchronisationssignale SCS jedes Mal übertragen, wenn ein Wechsel von einem Rahmen FRM zum darauffolgenden Rahmen erfolgt.

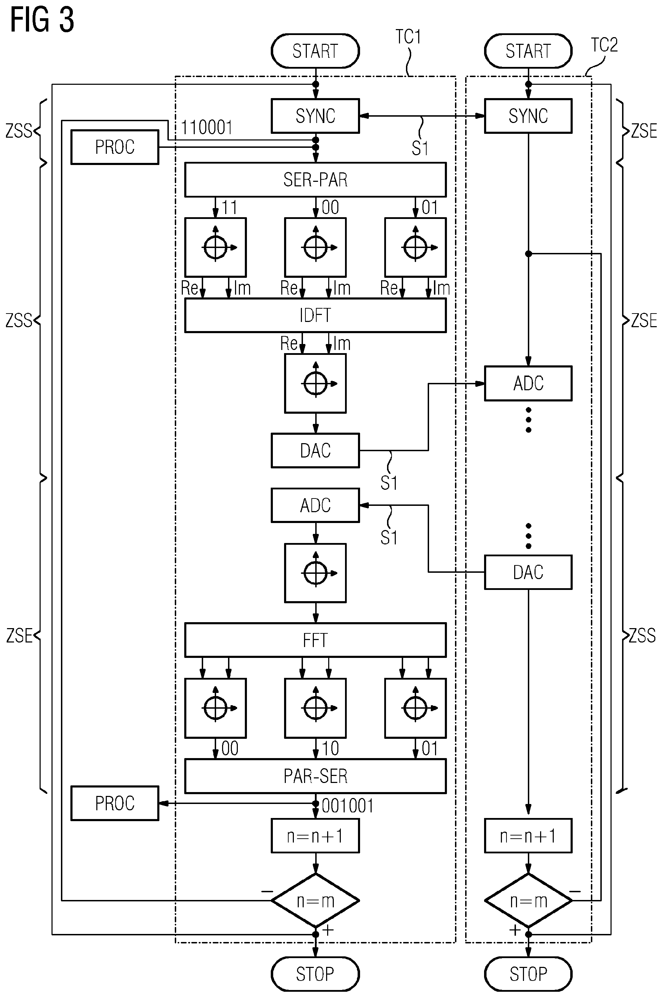

In Figur 3 ist in einem Ablaufdiagramm dargestellt, wie der Verfahrensablauf innerhalb eines Rahmens FRM gemäß Figur 2 in dem ersten Transceiver TC1 ausgestaltet sein kann. Außerdem ist auch der zweite Transceiver TC2 angedeutet, wobei der Verfahrensablauf hier vereinfacht dargestellt wurde.

Nach dem Start am Beginn des Rahmens FRM (vgl. Figur 2) erfolgt zunächst ein Synchronisationsschritt SYNC, bei dem über die erste Schnittstelle S1 ein Synchronisationssignal zwischen dem ersten Transceiver TC1 und dem zweiten Transceiver TC2 gesendet oder ausgetauscht wird (wie vorstehend bereits beschrieben). Dies erfolgt im ersten in Figur 2 dargestellten Zeitschlitz zum Senden ZSS, während zeitgleich im zweiten Transceiver TC2 ein Zeitschlitz ZSE zur Verfügung steht.

Im nächsten Schritt wird aus einem Prozessschritt PROC der Bahnanwendung ein generiertes Signal abgerufen, welches vereinfacht gemäß Figur 3 die Bitfolge 110001 aufweist. Dieses Signal soll nun mithilfe des OFDM-Verfahrens versendet werden. In einem nachfolgenden Aufteilungsschritt für das Signal SER-PAR wird die Bitfolge nun exemplarisch auf drei Trägerfrequenzen (Kanäle) verteilt. Dabei ergeben sich, wie angedeutet, die Teilsignale 11, 00 und 01. Diese Teilsignale werden jetzt auf mehrere orthogonale Trägerfrequenzen verteilt, was durch die Aufspaltung in einen Realanteil RE und einen Imaginäranteil IM symbolisiert wird.

Das so entstandene OFDM-Signal wird in einem nächsten Schritt einer inversen diskreten Fourier-Transformation IDFT unterworfen, sodass anschließend ein einzelnes Signal mit Realanteil RE und Imaginäranteil IM einem Schritt der Digital-Analog-Wandlung DAC unterworfen werden kann. Das so gewonnene analoge Signal wird über die erste Schnittstelle S1 an den zweiten Transceiver TC2 übertragen. Zu diesem Zweck befinden sich, wie in Figur 3 angedeutet, der erste Transceiver TC1 in einem Zeitschlitz zum Senden ZSS und der zweite Transceiver TC2 in einem Zeitschlitz zum Empfangen ZSE.

In dem zweiten Transceiver TC2 erfolgt in einem nächsten Schritt eine Analog-Digital-Wandlung ADC und nachfolgend eine Empfangsprozedur, die analog zu der Empfangsprozedur abläuft, die nachfolgend noch für den Transceiver TC1 beschrieben wird.

Im zweiten Transceiver TC2 folgt ein Zeitschlitz zum Senden ZSS, der zeitgleich mit einem Zeitschlitz zum Empfangen ZSE im Transceiver TC1 liegt. Ein neues Signal aus einem nicht dargestellten Prozess, welcher die Bitfolge 001001 aufweist, wird in nicht näher dargestellter Weise durch eine Sendeprozedur einem OFDM-Verfahren unterworfen, welches analog zu dem vorstehend für ersten Transceiver TC1 beschriebenen abläuft, und mit einem Schritt zur Digital-Analog-Wandlung DAC endet.

Anschließend wird das Signal über die erste Schnittstelle S1 an den ersten Transceiver TC1 übertragen, wo die Empfangsprozedur beginnt. Diese startet mit einem Schritt zur Analog-Digital-Wandlung ADC und einem anschließenden Schritt einer Fourier-Transformation FFT des digitalisierten Signals. Hierdurch wird dieses auf die Trägerfrequenzen aufgeteilt, angedeutet durch die jeweiligen Realanteile RE und Imaginäranteile IM, sodass die Teilsignale 00, 10 und 01 zur Verfügung stehen. In einem nachfolgenden Zusammenführungsschritt für das Signal PAR-SER wird das Nutzsignal 001001 zusammengefügt und kann in einen weiteren Prozessschritt PROC der Bahnanwendung einfließen.

Anschließend wird eine Zähl-Variable n um 1 erhöht in einem Schritt n=n+1 und nachfolgend in einem Abfrageschritt für das Erreichen des Rahmenendes geprüft, ob die Zählvariable n die Zahl der Zeitfenster m für einen Rahmen bereits erreicht hat (Abfrageschritt n=m). Ist dies der Fall, ist die Übertragung in dem betreffenden Rahmen beendet (Verfahrensschritt STOP). Ist dies nicht der Fall, so wird das Übertragen für zwei weitere Zeitschlitze, einem Zeitschlitz zum Senden ZSS und einem Zeitschlitz zum Empfangen ZSE in den Transceivern TC1 und TC2 wiederholt.

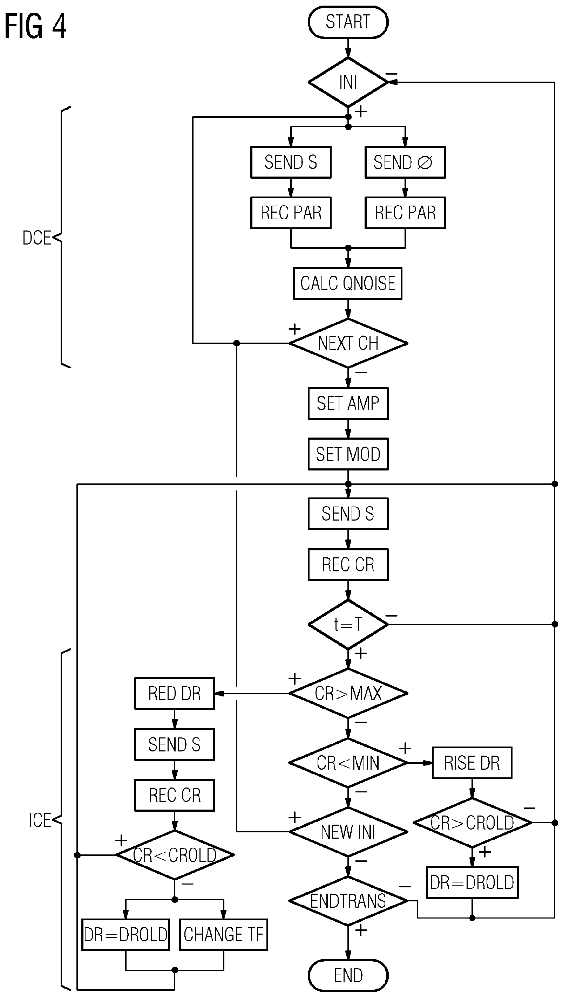

Der Figur 4 kann entnommen werden, wie das in Figur 3 beschriebene Verfahren, welches die Vorgehensweise zwischen zwei Synchronisationssignalen beschreibt, in ein Übertragungsverfahren eingebettet sein kann, wobei in diesem Verfahren zur Verbesserung bzw. Erhaltung der Übertragungsqualität sowohl ein direktes Kanalschätzungsverfahren DCE als auch ein indirektes Kanalschätzungsverfahren ICE in unterschiedlichen Verfahrensstadien zum Einsatz kommt. Das Verfahren gemäß Figur 3 wird in Figur 4 durch die Sendeschritte SEND S und Send 0 repräsentiert, wobei diese Sendeschritte für einen Zeitschlitz zum Senden ZSS oder mehrere Zeitschlitze zum Senden ZSS vorzugsweise den zu einem Rahmen FRM gehörenden Zeitschlitzen zum Senden stehen können.

Wird die Verbindung mit den beiden Transceivern, also dem ersten Transceiver und dem zweiten Transceiver, (nicht dargestellt) begonnen (Verfahrensschritt START), erfolgt zunächst ein Abfrageschritt, ob eine Initialisierung des Verfahrens durchgeführt werden soll. Dies ist insbesondere bei einer Erstinbetriebnahme erforderlich, bei der der erste Transceiver und der zweite Transceiver noch mit einer Modulationstabelle, enthaltend jeweils Modulationsvorschriften für verschiedene Trägerfrequenzen, default-mäßig ausgestattet sind. Damit ist eine Kommunikation zwischen dem ersten Transceiver und dem zweiten Transceiver zwar möglich, jedoch der größten Wahrscheinlichkeit nach nicht unter den optimalen Übertragungsbedingungen.

Zu diesem Zweck wird ein Kanalschätzungsverfahren durchgeführt. Dieses wird als direkte Kanalschätzung DCE bezeichnet, weil hierbei an sich bekannte Kanalschätzungsverfahren zum Einsatz kommen können, aber auch das nachfolgend beschriebene. Gemäß Figur 4 ist zur Kanalschätzung vorgesehen, dass bei einem Sendeschritt für ein Signal SEND S in einem Zeitschlitz ZSS auf einer gewählten Sendefrequenz, auch als Kanal bezeichnet, ein das Signal S gesendet wird. In einem weiteren Zeitschlitz ZSS wird ein Sendeschritt ohne Signal SEND 0 durchgeführt, bei dem eine Übertragung stattfindet, jedoch der betreffenden Trägerfrequenz kein Signal aufmoduliert wird. Bei beiden vorgenannten Sendeschritten wird in einem Aufzeichnungsschritt für einen Empfangsparameter REC PAR als Empfangsparameter gemäß Figur 4 die Signalamplitude s aufgezeichnet. Hierbei ist zu bemerken, dass auch in dem Fall des Sendeschritts ohne Signal SEND 0 ein Signal empfangen wird, welches ein Rauschen bei der Signalübertragung abbildet. Daher kann in einem nachfolgenden Bestimmungsschritt CALC QNOISE das Signal-Rauschverhältnis für eine Übertragung auf dem betreffenden Kanal bestimmt werden.

In einem nachfolgenden Abfrageschritt NEXT CH wird geprüft, ob noch ein weiterer Kanal vorhanden ist. Ist dies der Fall, wird auch für diesen Kanal, also diese Trägerfrequenz das direkte Kanalschätzungsverfahren DCE durchgeführt.

Sind alle verfügbaren Kanäle geprüft und ist deren Signalrauschverhältnis somit bekannt, kann zur Verbesserung der Übertragungsqualität ein Einstellschritt für eine Signalverstärkung SET AMP durchgeführt werden, damit das im ersten Transceiver oder zweiten Transceiver empfangene Signal hinsichtlich der Signalamplitude optimal ausgesteuert ist. Außerdem kann, nachdem die Übertragungsqualität für alle Kanäle geschätzt wurde, in einem Einstellschritt für die Modulation SET MOD die Modulationstabelle aktualisiert werden. Diese Aktualisierung erfolgt mit dem Ziel, jene Kanäle zu bevorzugen, deren Übertragungsqualität vergleichsweise gut ist. Außerdem kann die Übertragungsrate derart angepasst werden, dass diese bei Kanälen mit einer besseren Übertragungsqualität höher sind als bei Kanälen mit einer schlechteren Übertragungsqualität. Diese Modifikationen setzen voraus, dass das insgesamt nominell zur Verfügung stehende Übertragungsvolumen des betreffenden Übertragungsverfahren nicht ausgeschöpft wird. Dies ist insbesondere bei Anwendungen in der Bahntechnik gegeben, da die (vorzugsweise kabelgebundene) Datenverbindung vorrangig zur Übertragung von Meldungen und Steuerbefehlen verwendet wird, die ein geringes Datenvolumen benötigen.

Mit der aktualisierten Modulationstabelle können nun Sendeschritte SEND S durchgeführt werden, bei denen Nutzsignale NTS (vgl. Figur 2) übertragen werden, um einen Prozess PROC (vgl. Figur 3) zu unterstützen. Zwecks Überwachung des Übertragungsverfahrens wird hierbei in regelmäßigen Abständen, vorzugsweise für jeden Rahmen oder für eine festgelegte Anzahl von Zeitschlitzen oder über einen festgelegten Zeitraum, in einem Aufzeichnungsschritt REC CR die Korrekturrate aufgezeichnet, welche sich bei der Übertragung der Signale jeweils ergibt. Eine Korrektur der übertragenen Daten kann in an sich bekannter Weise durch die Ermittlung von Bitfehlern bei kodierten Signalen erfolgen. Die Aufzeichnung der Korrekturrate erfolgt gemäß Figur 4 konkret über einen festgelegten Zeitraum T, wobei in einem Abfrageschritt t=T überprüft wird, ob das Ende des festgelegten Zeitraums erreicht wurde (alternativ, nicht dargestellt können auch die überwachten Zeitschlitze gezählt und mit einer festgelegten Anzahl für die Zeitschlitze verglichen werden).

Sobald dies der Fall ist, wird das indirekte Kanalschätzungsverfahren ICE in Gang gesetzt. Als indirekt wird dieses Kanalschätzungsverfahren deswegen bezeichnet, weil bei der Kanalschätzung kein Empfangsparameter zugrunde gelegt wird, der einen direkten Rückschluss auf die Übertragungsqualität zulässt. Vielmehr wird die Korrekturrate für übertragene Daten herangezogen, aus der sich Rückschlüsse für eine Übertragungsqualität nur indirekt ziehen lassen. Deshalb ist das nachfolgend beschriebene Verfahren zur indirekten Kanalschätzung ICE davon abhängig, dass Änderungsmaßnahmen am Übertragungsverfahren daraufhin geprüft werden, ob diese überhaupt zu einer Verbesserung der Fehlerrate - und indirekt damit der Übertragungsqualität - beitragen.

Zu diesem Zweck wird in einem Abfrageschritt CR>MAX geprüft, ob die Korrekturrate größer als ein oberer Grenzwert MAX ist. Wenn dies der Fall ist, wird in einem Reduktionsschritt für die Datenrate RED DR darauf reagiert, damit der betreffende Kanal mehr Redundanz für eine zuverlässige Übertragung der Nutzdaten zur Verfügung stellen kann. Anschließend wird in einem Sendeschritt SEND S ein weiteres Signal gesendet und ein Aufzeichnungsschritt für die Korrekturrate REC CR durchgeführt. In einem nachfolgenden Abfrageschritt CR<CROLD wird abgefragt, ob sich durch die Reduktion der Datenrate auch die Fehlerrate verkleinert hat. Ist dies der Fall, so wird die Reduktion der Datenrate beibehalten und es wird der nächste Sendeschritt für Signale SEND S durchgeführt. Ist dies nicht der Fall, so wird in einem Zurücksetzungsschritt für die Datenrate DR=DROLD wieder die alte Datenrate gesetzt, da sich die Maßnahme nicht bewährt hat. Alternativ hierzu kann jedoch auch in einem Wechselschritt CHANGE TF die Trägerfrequenz gewechselt werden, sofern eine Trägerfrequenz zur Verfügung steht, die bisher nicht genutzt wurde. Mit den genannten Änderungen wird der nächste Sendeschritt für ein Signal SEND S durchgeführt.

Sollte der Abfrageschritt CR>MAX jedoch negativ ausfallen, wird in einem nächsten Abfrageschritt CR<MIN geprüft, ob die Korrekturrate kleiner als ein unterer Grenzwert ist (der untere Grenzwert liegt betragsmäßig unterhalb des oberen Grenzwertes oder ist mit diesem gleich, d. h**.** MAX ≥ MIN). Ist dies der Fall, wird in einem Steigerungsschritt RISE DR die Datenrate gesteigert, damit "gute" Trägerfrequenzen besser ausgelastet werden. In einem nachfolgenden Abfrageschritt CR>CROLD wird abgefragt, ob sich hierdurch die Korrekturrate vergrößert hat. Ist dies der Fall, wird in einem Zurücksetzungsschritt DR=DROLD die Datenrate wieder zurückgesetzt, da eine Steigerung der Fehlerkorrektur einen Hinweis darauf liefert, dass die Trägerfrequenz bereits optimal ausgelastet war. Ändert sich die Korrekturrate jedoch nicht, wird mit der neuen Datenrate der nächste Sendeschritt für ein Signal SEND S durchgeführt.

Nach Durchlaufen beider Abfrageschritte für die Korrekturrate wird ein nächster Abfrageschritt NEW INI durchlaufen, bei dem gefragt wird, ob eine erneute Initialisierung erfolgen soll. Dies ist auch während des Verfahrens möglich, wobei hierbei die Datenübertragung für Nutzdaten NTS unterbrochen werden muss. Dies muss durch eine geeignete Führung der Prozesse PROC sichergestellt sein, dahingehend, dass eine Unterbrechung der Datenübertragung keine Sicherheitsrisiken birgt. Insbesondere in der Bahntechnik ist dies von vorrangiger Bedeutung; der Initialisierungsschritt kann zum Beispiel in Betriebspausen durchgeführt werden.

Die Datenübertragung läuft anschließend weiter, wobei mit evtl. geänderten Datenraten DR oder Trägerfrequenzen TF weitergearbeitet wird. Dabei werden im nächsten Zeitraum T, wie bereits erläutert, die Korrekturraten aufgezeichnet und ggf. weiter geändert. Wenn eine Abfrage END TRANS ergibt, dass das Ende der Übertragung (Betriebsende des laufenden Prozesses PROC) erreicht ist, wird das Übertragungsverfahren beendet.

### Bezugszeichenliste

- SW: Stellwerk
- GL: Gleis
- IA: Innenanlage
- AA: Außenanlage
- M1 ... M2: Modem
- TC1 ... TC2: Transceiver
- CP1 ... CP2: Computer
- SE1 ... SE2: Speichereinrichtung
- PL: Stromleitung
- LSG: Lichtsignal
- ZSE: Zugsicherungssystem
- S1 ... S5: Schnittstelle
- s: Signalstärke
- t: Zeit
- S: Signal
- STS: Steuersignal
- NTS: Nutzsignal
- SCS: Synchronisationssignal
- ZSE: Zeitschlitz zum Empfangen
- ZSS: Zeitschlitz zum Senden
- FRM: Rahmen
- SYNC: Synchronisationsschritt
- SER-PAR: Aufteilungsschritt für das Signal
- IDFT: Inverse diskreten Fouriertransformation
- DAC: Digital-Analog-Wandlung
- ADC: Analog-Digital-Wandlung
- FFT: Fouriertransformation
- PAR-SER: Zusammenführungsschritt für das Signal
- PROC: Prozessschritt
- n=n+1: Hochsetzen der Zählvariable
- n=m: Abfrageschritt Rahmenende
- INI: Abfrageschritt Initialisierung
- SEND S: Sendeschritt für ein Signal
- SEND 0: Sendeschritt ohne Signal
- REC PAR: Aufzeichnungsschritt für einen Empfangsparameter
- CALC QNOISE: Bestimmungsschritt für Signal-Rausch-Verhältnis
- NEXT CH: Abfrageschritt: weiter Kanal vorhanden?
- SET AMP: Einstellschritt für Signalverstärkung
- SET MOD: Einstellschritt für Modulation
- REC CR: Aufzeichnungsschritt für Korrekturrate
- t=T: Abfrageschritt für das Ende eines festgelegten Zeitraums
- CR>MAX: Abfrageschritt: Korrekturrate größer als oberer Grenzwert
- CR<MIN: Abfrageschritt: Korrekturrate kleiner als unterer Grenzwert
- RED DR: Reduzierungsschritt für Datenrate
- RISE DR: Steigerungsschritt für Datenrate
- CR>CROLD: Abfrageschritt: Vergrößerung der Korrekturrate
- DR=DROLD: Zurücksetzungsschritt für Datenrate
- CHANGE TF: Wechselschritt für Trägerfrequenz
- NEW INI: Abfrageschritt einer erneuten Initialisierung
- END TRANS: Abfrageschritt Übertragungsende
- DCE: Direkte Kanalschätzung
- ICE: Indirekte Kanalschätzung

## Patentansprüche

1. Datenübertragungsverfahren, bei dem zwischen einem ersten Transceiver (TC1) und einem zweiten Transceiver (TC2) eine Übertragung von die Daten repräsentierenden Signalen (S) in beiden Richtungen erfolgt, wobei zur Modulation von Nutzsignalen (NTS) auf mehreren Trägerfrequenzen ein OFDM-Verfahren genutzt wird, wobei
• zur Übertragung der Signale (S) in den beiden Richtungen dem ersten Transceiver (TC1) und dem zweiten Transceiver (TC2) jeweils Zeitschlitze zum Senden (ZSS) und Zeitschlitze zum Empfangen (ZSE) zugewiesen werden,
• jedem Zeitschlitz für jede verwendete Trägerfrequenz eine Modulationsvorschrift zugeordnet wird,
• mit den übertragenen Signalen (S) zumindest dann Steuersignale (STS), welche mindestens eine zu verwendende Modulationsvorschrift festlegen, übertragen werden, wenn die Modulationsvorschrift für mindestens eine Trägerfrequenz geändert werden soll,
**dadurch gekennzeichnet,**
**dass**
• eine geänderte Modulationsvorschrift einer Trägerfrequenz für einen einzelnen Zeitschlitz verwendet wird,
• für darauffolgende Zeitschlitze die Modulationsvorschrift für diese Trägerfrequenz vor der Änderung verwendet wird,
• die Übertragungsqualität in dem Zeitschlitz, in dem die geänderte Modulationsvorschrift verwendet wurde, mit der Übertragungsqualität in mindestens einem Zeitschlitz, in dem die Modulationsvorschrift vor der Änderung verwendet wurde, verglichen wird,
• nach dem Vergleich die geänderte Modulationsvorschrift für folgende Zeitschlitze nur dann weiterverwendet wird, wenn die Übertragungsqualität gleichgeblieben ist oder eine Verbesserung der Übertragungsqualität ermittelt werden konnte, und sonst verworfen wird.

2. Datenübertragungsverfahren nach Anspruch 1,
**dadurch gekennzeichnet,**
**dass** die Übertragungsqualität anhand einer bei der verwendeten Modulationsvorschrift und verwendeten Trägerfrequenz jeweils bei der Übertragung auftretenden Korrekturrate (CR) bestimmt wird.

3. Datenübertragungsverfahren nach einem der voranstehenden Ansprüche,
**dadurch gekennzeichnet,**
**dass** die Änderung der Modulationsvorschrift in einer Änderung der Datenrate (DR) für die betreffende Trägerfrequenz und/oder in einer Zuweisung einer anderen Trägerfrequenz besteht.

4. Datenübertragungsverfahren nach Anspruch 3,
**dadurch gekennzeichnet,**
**dass** die Änderung in einer Verringerung der Datenrate (DR) besteht, wobei die Änderung durchgeführt wird, wenn die Übertragungsqualität in einem festgelegten Zeitraum (T) oder innerhalb einer festgelegten Zahl von Zeitschlitzen sich verringert und/oder einen festgelegten unteren Grenzwert unterschreitet.

5. Datenübertragungsverfahren nach Anspruch 3,
**dadurch gekennzeichnet,**
**dass** die Änderung in einer Erhöhung der Datenrate besteht, wobei die Änderung durchgeführt wird, wenn die Übertragungsqualität in einem festgelegten Zeitraum oder innerhalb einer festgelegten Zahl von Zeitschlitzen sich verbessert und/oder einen festgelegten oberen Grenzwert überschreitet.

6. Datenübertragungsverfahren nach einem der voranstehenden Ansprüche,
**dadurch gekennzeichnet,**
**dass** die Übertragungsqualität mit Hilfe einer direkten Kanalschätzung (DCE) bestimmt wird.

7. Datenübertragungsverfahren nach einem der Ansprüche 5 - 6, **dadurch gekennzeichnet,**
**dass** die direkte Kanalschätzung (DCE) in einem Initialisierungsschritt zur Einrichtung des Übertragungsverfahrens durchgeführt wird.

8. Modem (M1, M2), aufweisend
• einen Transceiver mit einer ersten Schnittstelle (S1) zur Datenübertragung und
• einen Computer (CP1, CP2), der über eine zweite Schnittstelle (S21, S22) mit dem Transceiver verbunden ist,
**dadurch gekennzeichnet,**
**dass** das Modem (M1, M2) eingerichtet ist, ein Verfahren zur Datenübertragung gemäß einem der voranstehenden Ansprüche durchzuführen.

9. Bahnanlage, aufweisend ein erste Teilanlage (IA) mit einem ersten Modem (M1) und eine zweite Teilanlage (AA) mit einem zweiten Modem (M2), wobei das erste Modem (M1) und das zweite Modem (M2) über eine erste Schnittstelle (S1) miteinander verbunden sind, **dadurch gekennzeichnet,**
**dass** das erste Modem (M1) und das zweite Modem (M2) jeweils gemäß dem vorstehenden Anspruch ausgeführt sind.

10. Computerprogrammprodukt mit Programmbefehlen, die bei der Ausführung durch einen Computer diesen veranlassen, das Verfahren nach einem der Ansprüche 1 - 7 auszuführen.

11. Bereitstellungsvorrichtung für das Computerprogrammprodukt nach dem letzten voranstehenden Anspruch, wobei die Bereitstellungsvorrichtung das Computerprogrammprodukt speichert und/oder bereitstellt.

## Claims

1. Data transfer method, in which a transfer of signals (S) representing the data takes place in both directions between a first transceiver (TC1) and a second transceiver (TC2), wherein an OFDM method is used for modulation of useful signals (NTS) to a plurality of carrier frequencies, wherein
• time slots for transmitting (ZSS) and time slots for receiving (ZSE) are in each case allocated to the first transceiver (TC1) and the second transceiver (TC2) for transferring the signals (S) in both directions,
• each time slot is assigned a modulation rule for each carrier frequency used,
• control signals (STS), which specify at least one modulation rule to be used, are at least transferred with the transferred signals (S) when the modulation rule for at least one carrier frequency is to be changed,
**characterised in that**
• a changed modulation rule of a carrier frequency is used for an individual time slot,
• for following time slots, the modulation rule for this carrier frequency before the change is used,
• the transfer quality in the time slot, in which the changed modulation rule was used, is compared with the transfer quality in at least one time slot, in which the modulation rule before the change was used,
• after the comparison, the changed modulation rule is only used for following time slots if the transfer quality has remained the same or if it was possible to ascertain an improvement of the transfer quality, and otherwise is discarded.

2. Data transfer method according to claim 1,
**characterised in that**
the transfer quality is determined on the basis of a correction rate (CR) occurring for the modulation rule used and carrier frequency used during the transfer in each case.

3. Data transfer method according to one of the preceding claims,
**characterised in that**
the change in the modulation rule consists of a change in the data rate (DR) for the carrier frequency in question and/or of an allocation of a different carrier frequency.

4. Data transfer method according to claim 3,
**characterised in that**
the change consists of a reduction of the data rate (DR), wherein the change is performed if the transfer quality decreases and/or falls below a specified lower limit value in a specified period of time (T) or within a specified number of time slots.

5. Data transfer method according to claim 3,
**characterised in that**
the change consists of an increase of the data rate, wherein the change is performed if the transfer quality improves and/or exceeds a specified upper limit value in a specified period of time or within a specified number of time slots.

6. Data transfer method according to one of the preceding claims,
**characterised in that**
the transfer quality is determined with the aid of a direct channel estimation (DCE).

7. Data transfer method according to one of claims 5 - 6,
**characterised in that**
the direct channel estimation (DCE) is performed in an initialisation step for setting up the transfer method.

8. Modem (M1, M2), having
• a transceiver with a first interface (S1) for data transfer and
• a computer (CP1, CP2), which is connected to the transceiver via a second interface (S21, S22),
**characterised in that**
the modem (M1, M2) is set up to perform a method for data transfer according to one of the preceding claims.

9. Rail installation, having a first sub-installation (IA) with a first modem (M1) and a second sub-installation (AA) with a second modem (M2), wherein the first modem (M1) and the second modem (M2) are interconnected via a first interface (S1),
**characterised in that**
the first modem (M1) and the second modem (M2) are in each case designed according to the preceding claim.

10. Computer program product with program commands which, when carried out by a computer, prompt said computer to carry out the method according to one of claims 1 - 7.

11. Provision apparatus for the computer program product according to the last preceding claim, wherein the provision apparatus stores and/or provides the computer program product.

## Revendications

1. Procédé de transmission de données, dans lequel entre un premier transceiver (TC1) et un deuxième transceiver (TC2), a lieu dans les deux sens une transmission de signaux (S) représentant les données, dans lequel on utilise un procédé OFDM pour la modulation de signaux (NTS) utiles sur plusieurs fréquences porteuses, dans lequel
• pour la transmission des signaux (S) dans les deux sens, on affecte au premier transceiver (TC1) et au deuxième transceiver (TC2) respectivement des créneaux temporels pour l'émission (ZSS) et des créneaux temporels pour la réception (ZSE),
• on affecte une règle de modulation à chaque créneau temporel pour chaque fréquence porteuse utilisée,
• on transmet avec les signaux (S) transmis au moins alors des signaux (STS) de commande, qui fixent au moins une règle de modulation à utiliser, si la règle de modulation doit être modifiée pour au moins une fréquence porteuse,
**caractérisé**
**en ce que**
• l'on utilise une règle de modulation modifiée d'une fréquence porteuse pour un créneau temporel individuel,
• l'on utilise pour des créneaux temporels venant ensuite, la règle de modulation pour cette fréquence porteuse avant la modification,
• l'on compare la qualité de transmission dans le créneau temporel, dans lequel la règle de modulation modifiée a été utilisée, à la qualité de transmission dans au moins un créneau temporel, dans lequel la règle de modulation avant la modification a été utilisée,
• après la comparaison, on ne réutilise la règle de modulation modifiée pour des créneaux temporels suivants, que si la qualité de transmission est restée constante ou si l'on pourrait déterminer une amélioration de la qualité de transmission et sinon on la rejette.

2. Procédé de transmission de données suivant la revendication 1,
**caractérisé**
**en ce que** l'on détermine la qualité de transmission respectivement à l'aide de taux (CR) de correction se produisant respectivement à la transmission, à l'aide d'une règle de modulation utilisée et d'une fréquence porteuse utilisée.

3. Procédé de transmission des données suivant l'une des revendications précédentes,
**caractérisé**
**en ce que** la modification de la règle de modulation consiste en une modification du débit (DR) de données pour la fréquence porteuse concernée et/ou dans une affectation à une autre fréquence porteuse.

4. Procédé de transmission des données suivant la revendication 3,
**caractérisé**
**en ce que** la modification consiste en une diminution du débit (DR) de données, dans lequel on effectue la modification, si la qualité de transmission dans un créneau (T) temporel déterminé ou dans un nombre déterminé de créneaux temporels diminue et/ou passe en dessous d'une valeur limite inférieure déterminée.

5. Procédé de transmission des données suivant la revendication 3,
**caractérisé**
**en ce que** la modification consiste en une augmentation du débit de données, dans lequel on effectue la modification, si la qualité de transmission dans un laps de temps déterminé ou dans un nombre déterminé de créneaux temporels s'améliore et/ou dépasse une valeur limite supérieure déterminée.

6. Procédé de transmission des données suivant l'une des revendications précédentes,
**caractérisé**
**en ce que** l'on détermine la qualité de transmission à l'aide d'une estimation (DCE) de canal directe.

7. Procédé de transmission de données suivant l'une des revendications 5 à 6,
**caractérisé**
**en ce que** l'on effectue l'estimation (DCE) de canal directe dans un stade d'initialisation pour la mise en œuvre du procédé de transmission.

8. Modem (M1, M2), comportant
• un transceiver ayant une première interface (S1) de transmission de données et
• un ordinateur (CP1, CP2), qui est raccordé au transceiver par une deuxième interface (S21, S22),
**caractérisé**
**en ce que** le modem (M1, M2) est agencé pour effectuer un procédé de transmission de données suivant l'une des revendications précédentes.

9. Installation de voie, comprenant une première installation (IA) partielle ayant un premier modem (M1) et une deuxième installation (AA) partielle ayant un deuxième modem (M2), dans lequel le premier modem (M1) et le deuxième modem (M2) sont raccordés entre eux par une première interface (S1), **caractérisée**
**en ce que** le premier modem (M1) et le deuxième modem (M2) sont réalisés respectivement suivant la revendication précédente.

10. Produit de programme d'ordinateur, comprenant des instructions de programme, qui lors de l'exécution par un ordinateur, font que celui-ci exécute le procédé suivant l'une des revendications 1 à 7.

11. Dispositif de mise à disposition du produit de programme d'ordinateur suivant la revendication mentionnée en dernier, dans lequel le dispositif de mise à disposition met le produit de programme d'ordinateur en mémoire et/ou le met à disposition.
